# EUROPÄISCHE PATENTSCHRIFT

(11) **EP 2 399 049 B1**
(45) Veröffentlichungstag und Bekanntmachung des Hinweises auf die Patenterteilung: **01.05.2013**
(21) Anmeldenummer: 10700316.2
(22) Anmeldetag: 08.01.2010
(51) Int. Cl.: F16H 61/70, F16H 61/20

(54) **VERFAHREN ZUM BETREIBEN EINES GRUPPENGETRIEBES**
METHOD FOR OPERATING A GROUP TRANSMISSION
PROCÉDÉ DE MISE EN OEUVRE D'UN TRAIN D'ENGRENAGES

(30) Priorität: 20.02.2009 DE 102009001030
(43) Veröffentlichungstag der Anmeldung: 28.12.2011
(73) Patentinhaber: ZF Friedrichshafen AG, 88038 Friedrichshafen (DE)
(72) Erfinder: MILLER, Martin, 88090 Immenstaad (DE)
(86) Internationale Anmeldenummer: PCT/EP2010/050148
(87) Internationale Veröffentlichungsnummer: WO 2010/094518

(56) Entgegenhaltungen:
- EP-A1- 1 662 185
- EP-A2- 1 101 980
- WO-A1-2004/023003
- WO-A1-2007/134943
- WO-A1-2010/027321
- DE-A1-102005 002 496
- DE-A1-102007 010 827

## Beschreibung

Die Erfindung betrifft ein Verfahren zum Betreiben eines Gruppengetriebes eines Kraftfahrzeugs. Die nicht veröffentlichte Anmeldung WO 2010/027321 A1 offenbart auch ein Verfahren zum Betreiben eines Gruppengetriebes eines Kraftfahrzeugs.

Gruppengetriebe mit einem mehrstufigen Hauptgetriebe und einer dem Hauptgetriebe vor- oder nachgeschalteten Bereichsgruppe sowie mit einer dem Hauptgetriebe vor- oder nachgeschalteten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

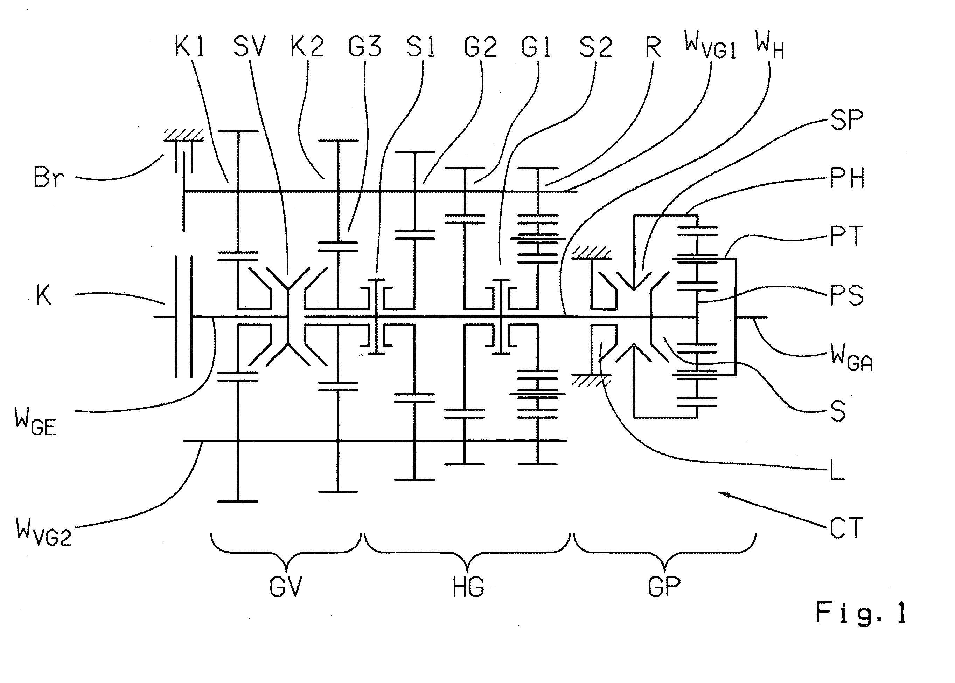

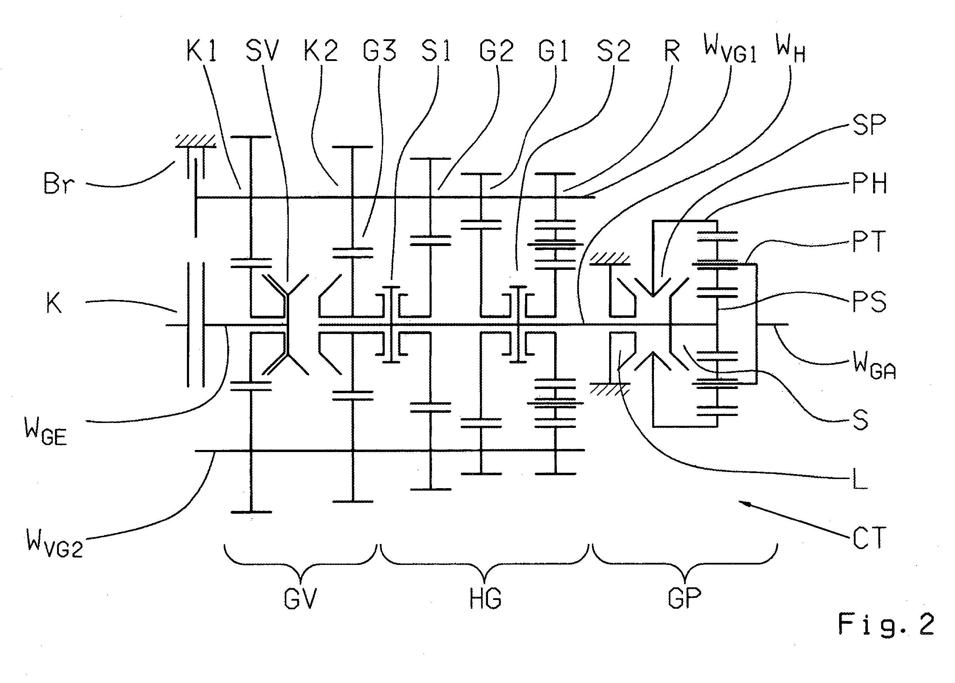

Fig. 1 und 2 zeigen jeweils ein Schema eines von der Anmelderin stammenden Gruppengetriebes der sogenannten AS-Tronic-Familie. Das in Fig. 1 und 2 dargestellte Gruppengetriebe CT umfasst ein Hauptgetriebe HG, eine dem Hauptgetriebe HG antriebstechnisch vorgeschaltete Splitgruppe GV sowie eine dem Hauptgetriebe HG nachgeschaltete Bereichsgruppe GP. Das Hauptgetriebe HG des Gruppengetriebes CT der Fig. 1 und 2 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit einer steuerbaren Getriebebremse Br versehen ist.

Das Hauptgetriebe HG ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet.

Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils in einem gemeinsamen Schaltpaket S1 bzw. S2 zusammengefasst. Das Hauptgetriebe HG ist unsynchronisiert schaltbar.

Die Splitgruppe GV des Gruppengetriebes CT der Fig. 1 und 2 ist zweistufig ausgebildet und ebenfalls in Vorgelegebauweise ausgeführt, wobei die beiden Übersetzungsstufen K1 und K2 der Splitgruppe GV zwei schaltbare Eingangskonstanten des Hauptgetriebes HG bilden. Durch eine geringere Übersetzungsdifferenz der beiden Übersetzungsstufen K1, K2 ist die Gruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, als Verbrennungsmotor ausgebildeten Antriebsaggregat in Verbindung steht.

Das Losrad der zweiten Übersetzungsstufe K2 ist drehbar auf der Hauptwelle W_{H} gelagert. Die Festräder beider Übersetzungsstufen K1, K2 der Splitgruppe GV sind jeweils drehfest mit den eingangsseitig verlängerten Vorgelegewellen W_{VG1} und W_{VG2} des Hauptgetriebes angeordnet. Die synchronisiert ausgebildeten Schaltkupplungen der Splitgruppe GV sind in einem gemeinsamen Schaltpaket SV zusammengefasst. Fig. 1 zeigt die Splitgruppe GV in Neutralposition und Fig. 2 in einer kraftschlüssigen Position.

Die dem Hauptgetriebe HG nachgeordnete Bereichsgruppe GP des Gruppengetriebes CT der Fig. 1 und 2 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes CT gekoppelt. Das Hohlrad PH steht mit einem Schaltpaket SP mit zwei synchronisierten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe GP ist synchronisiert schaltbar.

Dann, wenn ein Kraftfahrzeug mit einem Gruppengetriebe CT gemäß Fig. 1 und 2 mit ausgeschaltetem Antriebsaggregat abgestellt wird, nimmt die Splitgruppe GV des Gruppengetriebes CT typischerweise die in Fig. 2 gezeigte, kraftschlüssige Position ein. Soll das Antriebsaggregat nachfolgend gestartet werden, so wird, um das Starten desselben zu erleichtern, die Trennkupplung K geöffnet, da dann, wenn beim Starten des Antriebsaggregats die Splitgruppe GV die in Fig. 2 dargestellte, kraftschlüssige Position einnimmt, bei geschlossener Kupplung eine Vielzahl von Rädern und Wellen mit angetrieben werden müssten, so zum Bespiel beide Vorgelegewellen W_{VG1} und W_{VG2}. Um dies zu vermeiden, wird nach der Praxis zum Starten des Antriebsaggregats die Trennkupplung K geöffnet, nämlich über einen Kupplungssteller. Bei tiefen Außentemperaturen von weniger als -20°C kann unter Umständen die Trennkupplung K über den Kupplungssteller nicht mehr geöffnet werden. Da ferner bei derart tiefen Außentemperaturen die Ölviskosität im Gruppengetriebe CT zunimmt, muss dann beim Starten des Antriebsaggregats im Gruppengetriebe CT ein großer Widerstand überwunden werden, der unter Umständen so groß ist, dass das Antriebsaggregat nicht mehr gestartet werden kann.

Es besteht daher Bedarf an einem Verfahren zum Betreiben eines Gruppengetriebes eines Antriebsstrangs eines Kraftfahrzeugs, mit welchem selbst bei geringen Außentemperaturen ein zuverlässiges Starten des Antriebsaggregats gewährleistet werden kann.

Aus der DE 197 26 567 A1 ist ein Verfahren zum Betreiben eines Gruppengetriebes eines Kraftfahrzeugs bekannt, mit welchem eine Synchronisierung der Hauptwelle des Gruppengetriebes bei Ausführung einer Schaltung möglich ist.

Die DE 103 25 666 A1 offenbart ein Verfahren zum Betreiben eines konventionellen Getriebes eines Kraftfahrzeugs, wobei zum Schutz des Getriebes bei einem Kaltstart in Abhängigkeit von einer Temperaturstufe Funktionalitäten des Getriebes gezielt eingeschränkt werden.

Aus der EP 1 101 980 A2 ist ein mehrstufiges Getriebe eines Kraftfahrzeugs bekannt, welches ein Hauptgetriebe, eine dem Hauptgetriebe vorgeschaltete Splitgruppe und eine dem Hauptgetriebe nachgeschaltete Bereichsgruppe umfasst. Wenn festgelegte Bestimmungen erfüllt sind, wird gemäß dem in der EP 1 101 980 A2 beschriebenen Verfahren die Splitgruppe in eine Neutralposition geschaltet, um ein Klappern der Zahnräder im Hauptgetriebe zu verhindern.

Hiervon ausgehend liegt der vorliegenden Erfindung das Problem zu Grunde, ein neuartiges Verfahren zum Betreiben eines Gruppengetriebes eines Kraftfahrzeugs zu schaffen.

Dieses Problem wird nach einem ersten Aspekt der Erfindung durch ein Verfahren gemäß Anspruch 1 gelöst. Hiernach wird zum Starten des Antriebsaggregats die dem Hauptgetriebe vorgeschaltete Splitgruppe und/oder die demselben vorgeschaltete Bereichsgruppe in eine Neutralstellung überführt.

Nach einem nicht erfindungsgemäßen Verfahren wird dieses Problem dadurch gelöst, dass beim Ausstellen des Antriebsaggregats die dem Hauptgetriebe vorgeschaltete Splitgruppe und/oder die demselben vorgeschaltete Bereichsgruppe in eine Neutralstellung überführt.

Der Erfindung und dem nicht erfindungsgemäßen Verfahren ist gemeinsam, dass die dem Hauptgetriebe vorgeschaltete Splitgruppe und/oder die demselben vorgeschaltete Bereichsgruppe in die Neutralstellung überführt wird, um selbst bei tiefen Außentemperaturen ein problemloses Starten des Antriebsaggregats des das Gruppengetriebe umfassenden Antriebsstrangs zu gewährleisten.

Gemäß der hier vorliegenden Erfindung wird hierzu zum Starten des Antriebsaggregats die dem Hauptgetriebe vorgeschaltete Splitgruppe und/oder die demselben vorgeschaltete Bereichsgruppe in die Neutralstellung überführt, und zwar vorzugsweise nach Zündung des Antriebsaggregats. Gemäß dem nicht erfindungsgemäβen Verfahren wird beim Ausstellen des Antriebsaggregats die dem Hauptgetriebe vorgeschaltete Splitgruppe und/oder die demselben vorgeschaltete Bereichsgruppe in die Neutralstellung überführt.

Ein Ausführungsbeispiel der Erfindung wird, ohne hierauf beschränkt zu sein, an Hand der Zeichnung näher erläutert. Dabei zeigt:
- Fig. 1: ein Schema eines Gruppengetriebes in einem ersten Schaltzustand der Splitgruppe; und
- Fig. 2: ein Schema eines Gruppengetriebes in einem zweiten Schaltzustand der Splitgruppe.

Die hier vorliegende Erfindung betrifft ein Verfahren zum Betreiben eines Gruppengetriebes eines Kraftfahrzeugs, insbesondere des in Fig. 1 und 2 gezeigten, bereits im Detail beschriebenen, automatisierten Gruppengetriebes CT. Das erfindungsgemäße Verfahren betrifft solche Details, mit denen ein Antriebsaggregat problemlos gestartet werden kann.

Gemäß der hier vorliegenden Erfindung wird dann, wenn ein Antriebsstrang, der ein Antriebsaggregat und ein Gruppengetriebe CT insbesondere gemäß Fig. 1 und 2 umfasst, gestartet werden soll, zum Starten des Antriebsaggregats die dem Hauptgetriebe HG vorgeschaltete Splitgruppe GV in eine Neutralstellung überführt. Hierdurch ist sichergestellt, dass zum Starten des Antriebsaggregats die im Getriebe mit zu drehenden Wellen und Räder auf ein absolutes Minimum reduziert sind, um so den Widerstand des Gruppengetriebes CT beim Starten des Antriebsaggregats zu minimieren.

Gemäß der hier vorliegenden Erfindung wird ausschließlich bei Vorliegen definierter Betriebsbedingungen des Antriebsstrangs zum Starten des Antriebsaggregats die dem Hauptgetriebe HG vorgeschaltete Splitgruppe GV in die Neutralstellung gemäß Fig. 1 überführt. So kann zum Beispiel vorgesehen sein, die Splitgruppe GV nur dann in die Neutralstellung der Fig. 1 zum Starten des Antriebsaggregats zu überführen, wenn beim Starten des Antriebsaggregats eine Außentemperatur oder eine Getriebetemperatur kleiner als ein definierter Grenzwert, zum Beispiel kleiner als -20°C, ist.

Erfindungsgemäß wird die Splittgruppe GV zum Starten des Antriebsaggregats dann in die Neutralstellung überführt, wenn beim Starten des Antriebsaggregats die Trennkupplung K nicht geöffnet werden kann, wobei dies zum Bespiel mithilfe eines der Trennkupplung K zugeordneten Sensors, der die Position der Trennkupplung K überwacht, detektiert werden kann. Alternativ oder zusätzlich kann die Splitgruppe GV zum Starten des Antriebsaggregats dann in eine Neutralstellung überführt werden, wenn bei einem vorherigen Startvorgang das Antriebsaggregat nicht gestartet werden konnte.

Nach einer vorteilhaften Weiterbildung der hier vorliegenden Erfindung ist es auch möglich, bei jedem Startvorgang des Antriebsaggregats die dem Hauptgetriebe HG vorgeschaltete Splitgruppe GV in die Neutralstellung der Fig. 1 zu überführen.

Die Überführung der Splitgruppe GV in die Neutralstellung zum Starten des Antriebsaggregats gemäß der Erfindung erfolgt jeweils nach Zündung desselben.

Gemäß der hier vorliegenden Erfindung wird demnach zum Starten eines Antriebsaggregats die Splitgruppe GV des Gruppengetriebes CT in die Neutralstellung der Fig. 1 überführt. Somit muss ein Anlasser nur noch die Eingangswelle W_{GE} des Gruppengetriebes CT zusammen mit der Mitnehmerscheibe und einem nicht-dargestellten Lager antreiben, Die Vorgelegewellen W_{VG1} und W_{VG2}, alle mit den Vorgelegeverzahnungen kämmenden Räder und Lager bleiben hingegen stehen, wodurch der Widerstand, den das Gruppengetriebe CT beim Anlassen des Antriebsaggregats bereitstellt, deutlich verringert werden kann.

Vorzugsweise erfolgt zum Starten des Antriebsaggregats die Überführung der Splitgruppe GV in Neutral bei geringen Außentemperaturen bzw. geringen Getriebetemperaturen, die unterhalb eines vorgegebenen Temperaturgrenzwerts liegen. Bei einem länger abgestellten Kraftfahrzeug entspricht die Getriebetemperatur in etwa der Außentemperatur.

Dann, wenn dem Hauptgetriebe HG eine Bereichsgruppe vorgeschaltet ist, wird zum Starten des Antriebsaggregats die Bereichsgruppe in die Neutralstellung überführt. Dann, wenn dem Hauptgetriebe HG mehrere Gruppen, zum Beispiel eine Splitgruppe und eine Bereichsgruppe, vorgeschaltet sind, wird zumindest diejenige Gruppe zum Starten des Antriebsaggregats in die Neutralstellung überführt, deren Schaltpaket über die Eingangswelle des Gruppengetriebes mit einer Mitnehmerscheibe der Trennkupplung K gekoppelt ist. Dies ist in Fig. 1 und 2 für das Schaltpaket SV der Splitgruppe GV der Fall.

Gemäß dem nicht erfindungsgemäßem Verfahren wird beim Ausstellen des Antriebsaggregats die dem Hauptgetriebe vorgeschaltete Splitgruppe GV in die Neutralstellung überführt.

Dies kann nach einer ersten vorteilhaften Weiterbildung des nicht erfindungsgemäßen Verfahrens ausschließlich bei Vorliegen definierter Betriebsbedingungen des Antriebsstrangs oder nach einer zweiten vorteilhaften Weiterbildung des nicht erfindungsgemäßen Verfahrens bei jedem Ausstellen des Antriebsaggregats erfolgen. Dann, wenn beim Ausstellen des Antriebsaggregats die Splitgruppe GV ausschließlich bei Vorliegen definierter Betriebsbedingungen für den Antriebsstrang in die Neutralstellung überführt wird, erfolgt dies dann, wenn eine Außentemperatur beim Abstellen des Kraftfahrzeugs und damit beim Ausstellen des Antriebsaggregats kleiner als ein definierter Grenzwert, zum Beispiel kleiner als -20°C, ist. Hiermit kann sichergestellt werden, dass bei einem nachfolgenden Starten des Antriebsaggregats die Splitgruppe GV des Gruppengetriebes CT bereits die Neutralstellung einnimmt und somit beim Starten des Antriebsaggregats nur ein geringer Widerstand des Gruppengetriebes CT überwunden werden muss.

In dem Fall, in welchem bei Realisierung der ersten vorteilhaften Weiterbildung des nicht erfindungsgemäßen Verfahrens das Kraftfahrzeug keinen eigenen Temperatursensor zur Messung der Außentemperatur aufweist, kann beim Starten des Antriebsaggregats die Temperatur des Getriebes, die beim Starten des Antriebsaggregats in etwa der Außentemperatur entspricht, gespeichert werden, um beim nächsten Ausstellen des Antriebsaggregats die Splitgruppe GV des Gruppengetriebes CT dann in die Neutralstellung zu überführen, wenn die beim letzten Starten des Antriebsaggregats gespeicherte Temperatur kleiner als der definierte, vorgegebene Grenzwert ist. Verfügt hingegen das Kraftfahrzeug über einen separaten Außentemperatursensor, so kann abhängig von der von demselben gemessenen Außentemperatur die Überführung der Splitgruppe GV in die Neutralstellung erfolgen.

In Übereinstimmung mit der hier vorliegenden Erfindung kann das nicht erfindungsgemäße Verfahren auch bei Gruppengetrieben zum Einsatz kommen, bei welchem dem Hauptgetriebe derselben eine Bereichsgruppe oder eine Splitgruppe und eine Bereichsgruppe vorgeschaltet sind. Dann, wenn dem Hauptgetriebe HG eine Bereichsgruppe vorgeschaltet ist, wird beim Ausstellen des Antriebsaggregats die Bereichsgruppe in die Neutralstellung überführt. Dann, wenn dem Hauptgetriebe HG mehrere Gruppen, zum Beispiel eine Splitgruppe und eine Bereichsgruppe, vorgeschaltet sind, wird zumindest diejenige Gruppe beim Ausstellen des Antriebsaggregats in die Neutralstellung überführt, deren Schaltpaket über die Eingangswelle des Gruppengetriebes mit einer Mitnehmerscheibe der Trennkupplung K gekoppelt ist. Dies ist in Fig. 1 und 2 für das Schaltpaket SV der Splitgruppe GV der Fall.

## Patentansprüche

1. Verfahren zum Betreiben eines Gruppengetriebes eines Kraftfahrzeugs, wobei das Gruppengetriebe in einem Antriebsstrang zwischen einem Antriebsaggregat sowie einem Achsantrieb angeordnet ist und mindestens ein mehrstufiges Hauptgetriebe (HG), eine demselben vorgeschaltete Splitgruppe (GV) und/oder eine demselben vorgeschaltete Bereichsgruppe (GP) umfasst, wobei das Hauptgetriebe (HG) in Vorlegebausweise mit mindestens einer Vorgelegewelle (W_{VG1}, W_{VG2}) ausgeführt ist, wobei eine Eingangswelle (W_{GE}) des Gruppengetriebes über eine steuerbare Trennkupplung (K) mit dem Antriebsaggregat und eine Ausgangswelle(W_{GA}) des Gruppengetriebes mit dem Achsantrieb in Verbindung steht, wobei ausschließlich beim Vorliegen definierter Betriebsbedingungen des Antriebsstrangs zum Starten des Antriebsaggregats die dem Hauptgetriebe (HG) vorgeschaltete Splitgruppe (GV) und/oder die demselben vorgeschaltete Bereichsgruppe (GP) in eine Neutralstellung überführt wird, und wobei die dem Hauptgetriebe (HG) vorgeschaltete Splitgruppe (GV) und/oder Bereichsgruppe (GP) in eine Neutralstellung überführt wird, wenn die Trennkupplung (K) nicht geöffnet werden kann, oder wenn das Antriebsaggregat in einem vorherigen Startvorgang nicht gestartet werden konnte.

2. Verfahren nach Anspruch 1, **dadurch gekennzeichnet, dass** die dem Hauptgetriebe (HG) vorgeschaltete Splitgruppe (GV) und/oder Bereichsgruppe (GP) dann in eine Neutralstellung überführt wird, wenn eine Außentemperatur oder eine Getriebetemperatur kleiner als ein definierter Grenzwert ist.

3. Verfahren nach Anspruch 1, **dadurch gekennzeichnet, dass** bei jedem Starten des Antriebsaggregats die dem Hauptgetriebe (HG) vorgeschaltete Splitgruppe (GV) und/oder die demselben vorgeschaltete Bereichsgruppe (GP) in eine Neutralstellung überführt wird.

4. Verfahren nach einem der Ansprüche 1 bis 3, **dadurch gekennzeichnet, dass** hierbei die dem Hauptgetriebe (HG) vorgeschaltete Splitgruppe (GV) und/oder die demselben vorgeschaltete Bereichsgruppe (GP) jeweils nach Zündung des Antriebsaggregats in eine Neutralstellung überführt werden.

## Claims

1. Method for operating a group transmission of a motor vehicle, wherein the group transmission is arranged in a drivetrain between a drive assembly and a final drive and comprises at least one multi-stage main transmission (HG), a splitter group (GV) mounted upstream of said main transmission and/or a range group (GP) mounted upstream of said main transmission, wherein the main transmission (HG) is of countershaft-type design with at least one countershaft (W_{VG1}, W_{VG2}), wherein an input shaft (W_{GE}) of the group transmission is connected via a controllable separating clutch (K) to the drive assembly, and an output shaft (W_{GA}) of the group transmission is connected to the final drive, wherein the splitter group (GV) mounted upstream of the main transmission (HG) and/or the range group (GP) mounted upstream of said main transmission is placed into a neutral position only in the presence of defined operating conditions of the drivetrain for the starting of the drive assembly, and wherein the splitter group (GV) and/or range group (GP) mounted upstream of the main transmission (HG) is placed into a neutral position if the clutch (K) cannot be opened or if the drive assembly was unable to be started in a preceding starting process.

2. Method according to Claim 1, **characterized in that** the splitter group (GV) and/or range group (GP) mounted upstream of the main transmission (HG) is placed into a neutral position if an outside temperature or a transmission temperature is below a defined threshold value.

3. Method according to Claim 1, **characterized in that** the splitter group (GV) mounted upstream of the main transmission (HG) and/or the range group (GP) mounted upstream of said main transmission is placed into a neutral position upon every starting operation of the drive assembly.

4. Method according to one of Claims 1 to 3, **characterized in that**, here, the splitter group (GV) mounted upstream of the main transmission (HG) and/or the range group (GP) mounted upstream of said main transmission are placed into a neutral position in each case after ignition of the drive assembly.

## Revendications

1. Procédé de mise en oeuvre d'une boîte de vitesses à groupes de véhicule automobile, la boîte de vitesses à groupes étant disposée dans une chaîne cinématique entre un groupe d'entraînement et un entraînement d'essieu et comprenant au moins une boîte de vitesses principale à plusieurs étages (HG), un groupe répartiteur (GV) connecté en amont de celle-ci et/ou un groupe multiple (GP) connecté en amont de celle-ci, la boîte de vitesses principale (HG) étant réalisée dans un mode de construction de positionnement avant avec au moins un arbre de positionnement avant (W_{VG1}, W_{VG2}), un arbre d'entrée (W_{GE}) de la boîte de vitesses à groupes étant reliée au groupe d'entraînement et un arbre de sortie (W_{GA}) de la boîte de vitesses à groupes étant relié à l'entraînement d'essieu, par le biais d'un embrayage de coupure (K) commandable, le groupe répartiteur (GV) connecté en amont de la boîte de vitesses principale (HG) et/ou le groupe multiple (GP) connecté en amont de celle-ci étant amenés dans une position neutre permettant de démarrer le groupe d'entraînement exclusivement en présence de conditions de fonctionnement définies de la chaîne cinématique, et le groupe répartiteur (GV) et/ou le groupe multiple (GP) connectés en amont de la boîte de vitesses principale (HG) étant amenés dans une position neutre lorsque l'embrayage de coupure (K) ne peut pas être ouvert ou lorsque le groupe d'entraînement n'a pas pu être démarré lors d'un processus de démarrage précédent.

2. Procédé selon la revendication 1, **caractérisé en ce que** le groupe répartiteur (GV) et/ou le groupe multiple (GP) connectés en amont de la boîte de vitesses principale (HG) sont ensuite amenés dans une position neutre lorsqu'une température extérieure ou une température de boîte de vitesses est inférieure à une valeur limite définie.

3. Procédé selon la revendication 1, **caractérisé en ce qu'**à chaque démarrage du groupe d'entraînement, le groupe répartiteur (GV) connecté en amont de la boîte de vitesses principale (HG) et/ou le groupe multiple (GP) connecté en amont de celle-ci sont amenés dans une position neutre.

4. Procédé selon l'une quelconque des revendications 1 à 3, **caractérisé en ce que** le groupe répartiteur (GV) connecté en amont de la boîte de vitesses principale (HG) et/ou le groupe multiple (GP) connecté en amont de celle-ci sont respectivement amenés dans une position neutre après l'allumage du groupe d'entraînement.
